# EUROPEAN PATENT APPLICATION

(11) **EP 2 860 858 A1**
(43) Date of publication of application: **15.04.2015**
(21) Application number: 14164220.7
(22) Date of filing: 10.04.2014
(51) Int. Cl.: H02K 15/12

(54) **Manufacturing method of a conductor bar**

(71) Applicant: ALSTOM Technology Ltd, 5400 Baden (CH)
(72) Inventor: Fubel, Armin, 5400 Baden (CH); Hillmer, Thomas, 5034 Suhr (CH); Anderton, Alexander René, 5507 Mellingen (CH); Stein, Ruediger, 79804 Dogern (DE)

(57) **Abstract**

An alternative method for fabricating a conductor bar (1,11) with a vacuum pressure resin-rich process (VPRP), especially for assembly into electric machines, is disclosed. It includes a method for producing a conductor bar (1,11) comprising the steps of -packing a conductive bar with a B-stage resin-rich main wall insulation (3) into a layer of release tape (5), a layer of breather/ bleeder (15) and thereon a layer of synthetic material (20) which is forming a hermetical sealing around the insulated conductive bar (1,11), -placing the insulated conductive bar (1,11) including above described layers into a vessel whereby the volume inside the synthetic layer (20) is connected to a vacuum pump, -evacuating the volume inside the synthetic layer (20) while an overpressure is created inside the vessel with a heated compression gas causing consolidation and thermal curing of the resin-rich insulation (3).

## Description

The present disclosure relates to the technical field of conductor bars (=half-windings), especially for assembly into electric machines.

The electric machine is in particular a rotating electric machine such as a synchronous generator to be connected to a gas or steam turbine (turbogenerator) or a synchronous generator to be connected to a hydro turbine (hydro generator) or an asynchronous generator or a synchronous or asynchronous electric motor or also other types of electric machines.

The high-voltage insulation systems of windings from large rotating electrical machines, like turbo or hydro generators, are generally composite materials made of mica-glass tapes and resins. One common variant are dry mica-glass tapes (also called resin-poor tapes), which are wound around conductive bars that consist of the actual half-windings from thinly insulated copper strands and which are impregnated afterwards with resin to form a conductor bar. The term conductor bar herein thus defines the end product according to examples of the invention, the term conductive bar herein defines the starting product. This process is called vacuum pressure impregnation (VPI) process, because the dry-insulated conductive bars are evacuated in an autoclave, vessel, then flooded by the impregnation resin, and finally overpressure is applied by gas on top of the resin level, in order to press the resin into the insulation. Depending on the details of the variant of VPI the dry-insulated conductive bars are encapsulated before the impregnation or the impregnated conductive bars are pressed in moulds after the impregnation, where excess resin has to be slowly pressed out. The curing of the impregnated conductive bars of all VPI variants is done after the impregnation bath under normal atmosphere.

Another common variant of a high-voltage insulation composite material are mica-glass tapes, which are preimpregnated during the manufacturing and pre-cured to a so-called B-stage, which is pre-cross-linked. These B-stage tapes (also called resin-rich tapes) are wound around conductive bars. Then the resin-rich-insulated conductive bars are heated under compression in order to form a cured insulation. This is done either with a hot press, the so called pressure resin-rich [PRR] process, or with an autoclave or vessel that can be evacuated and set under overpressure and where the straight section of the insulated conductive bar is shaped by L-shapes, the so called vacuum pressure resin-rich [VPRR] process. The VPRR process has a superior quality over the PRR process, since the vacuum phase reduces voids by extracting remaining solvent and moisture content from the insulation.

This invention essentially concerns methods to manufacture conductor bars regarding the VPRR process. The historically used auxiliary material of this process for hermetical sealing of the conductor bars inside the autoclave or vessel after the vacuum phase and for applying the heat for curing is bitumen, also called asphalt. Bitumen is still used by several manufacturers of conductor bars. Further, there is high lead time and costs for preparation for curing leading to high investment costs. Hot bitumen vapours bear cancerous risks. Further, bitumen is always to be kept hot in manufacturing process in order to maintain the bitumen in the inlet pipes of the vessel in fluid condition.

It is an object of the invention to provide an alternative method for fabricating a conductor bar. This object is achieved by a method for fabricating a conductor bar, and the use of a layer for a conductor bar according to the independent claims.

Further aspects of the invention are described in the dependent claims.

In one example the layer of synthetic material is made of polyamide (nylon) that facilitates a cost effective fabrication.

In a further example the layer of synthetic material has the shape of a flat tube. By this measure the conductive bar can be covered in an easy way.

In a further example the layer of synthetic material is a self-fusing tape wound around the conductor bar in an overlapped manner. By this measure the fabrication process of the conductive bar can be simplified.

In a further example the conductor bar is a stator bar for use in a stator of an electric machine, for which the invention is especially advantageous.

### Brief Description of the drawings

Further characteristics and advantages will be more apparent from the description of a preferred but non-exclusive embodiment of the method for producing a conductor bar, illustrated by way of non-limiting example in the accompanying drawings, in which:
- Figure 1: is a schematic side view of a vessel with a conductive bar, which is insulated and packed into functional layers, in particular a synthetic layer, which is connected to a vacuum pump for applying vacuum and to a venting/pressuring valve for applying atmospheric gas pressure or overpressure, to produce a conductor bar;
- Figure 2: is a schematic cross-section of a conductor bar in a processing step according to an example of the invention.

Referring to the figures reference numbers designate identical or corresponding parts throughout this document.

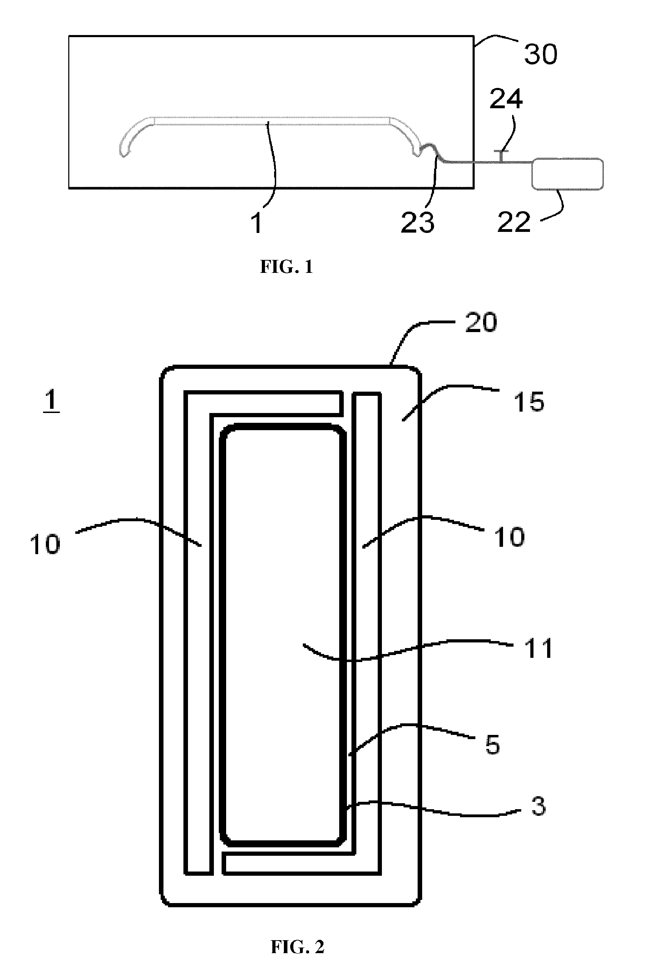

Fig. 1 shows a schematic side view of a vessel 30 to support the manufacturing of a conductor bar 1. The conductor bar 1 is brought into the vessel 30, a layer made of a synthetic material 20 surrounds the conductor bar 1, in this example made of polyamide, in the following also named nylon. The layer made of a synthetic material 20 is denominated as a synthetic layer 20 or synthetic material layer 20 in the following. A flexible vacuum line 23 or autoclave hose is connected to the conductor bar 1 and connects the conductor bar 1 with a vacuum pump 22 outside the vessel 30 for applying a vacuum. A venting/ pressuring valve 24 is provided between the vacuum pump 22 and the flexible vacuum line 23 to control the application of vacuum and atmospheric gas pressure or overpressure. Between the venting/ pressuring valve 24 and the flexible vacuum line 23 a lead through pipe is arranged in this example. The flexible vacuum line 23 ends in the space between a breather/ bleeder layer 15 and the synthetic layer 20. The breather/ bleeder layer 15 comprises the material of polyester felt. For the sake of definition here a conductive bar 11 is a bar which consists of thinly insulated copper strands that conduct electric current and which has essentially no further layers or fittings and is the basic item for fabricating a conductor bar 1. A conductor bar 1 according to the definition here is thus the product obtained when processing the conductive bar 11 in the described way. The synthetic layer 20 in this example has the shape of a flat tube or a bag which is essentially gas tight and which completely surrounds the conductive bar 11. In this way the vacuum pump 22 can deflate the volume inside the synthetic layer 20.

The synthetic layer 20 surrounding the conductive bar 11 is pressed against the conductive bar 11 and the synthetic layer 20 with the layer of breather/breeder 15 seals the conductive bar 11 hermetically. The synthetic layer 20 as a vacuum bag fulfils the function of hermetical sealing of the conductive bar 11 from the environment inside the vessel 30 or autoclave of the main wall insulation 3 or insulation, the release tape 5, the shapes 10, and the breather/ bleeder 15. The vessel 30 is first evacuated and then filled with a compression gas such as nitrogen, the step of applying heat to the conductor bar 1 is realized by heating the compression gas and optionally ventilating the compression gas in the vessel 30 or autoclave. A circular ventilation can be established. The volume inside the synthetic layer 20 can be evacuated and also vented or pressured independently of the pressure inside the vessel 30, as long as the pressure inside the synthetic layer is kept lower than the pressure inside the vessel 30 to prevent inflating and damaging of the synthetic layer 20.

Fig. 2 shows a schematic cross-section of the straight part of a conductive bar 11 and the surrounding layers to manufacture a conductor bar 1 according to an example of the invention. The conductive bar 11 is covered by an insulation layer, in the following also denoted as main wall insulation 3. The main wall insulation 3 comprises a B-stage resin which first liquefies and then cures in the manufacturing process to create a tight high-voltage insulation around the conductive bar 11. A release tape 5 is wound around the insulation layer 3 and serves for unpacking the conductor bar 1 after curing of the resin without damaging the main wall insulation 3. Further, around the release tape 5 two shapes 10 are arranged essentially enclosing the three former items in the straight part of the conductive bar 11. The shapes 10 are for creating defined dimensions and smooth surfaces of the straight part of the insulated conductive bar 11 during curing of the resin. The shapes 10 are by way of example made of steel and have the form of an 'L' with one long side and a shorter side at the end perpendicular to the long side. The shapes 10 are arranged in a way to create a closed loop around the oval arrangement. Around the shapes 10 a breather/ bleeder 15 is arranged, e.g. a breather/ bleeder 15 out of polyester felt or a similar material that enables the vacuum transport along the length of the insulated conductive bar 11 and the intaking of the pressed-out excess resin from a resin-rich tape. The vacuum transport and the intaking take place also during compression by the compression gas overpressure in the vessel 30, as described later. Last, the synthetic layer 20 is put around the conductive bar 11 with the applied layers as described above. The synthetic layer 20 can adopt the form of a bag, which is sealed at both ends, and a condition of a vacuum or near vacuum is created inside the synthetic layer 20 as will be described later in more detail. The synthetic layer 20 can be made of nylon or a similar synthetic material in shape of a flat tube and/ or can be made of self-fusing tape.

In the following the fabrication method is described along with references to Fig. 1 and Fig. 2. After preparation of the conductive bar 11 with all surrounding layers as shown in Fig. 2, the such prepared bar is inserted into a vessel 30 or autoclave and connected to a vacuum pump 22 as shown in Fig. 1. Then the curing process starts with a so-called 'vacuum-vacuum' phase at sufficiently low temperatures in order prevent starting of the curing reaction of the B-stage resin, where a condition of a vacuum or near vacuum is created in the volume inside the synthetic layer 20 and also outside of this volume, i.e. inside of the vessel 30 or autoclave. The pressure in the volume inside the synthetic layer 20 is controlled by the vacuum pump 22 and the venting/ pressuring valve 24. The pressure in the vessel 30 is controlled by a further device (not shown). As the synthetic layer 20 in this example has the form of a tube or bag and is gas-tight the synthetic layer 20 is also called vacuum bag in the following. During the 'vacuum-vacuum' phase and also during the later phase where the vacuum bag is vented or optionally pressured the pressure in the vessel 30 or autoclave needs always to stay above the pressure in the vacuum bag in order not to inflate the vacuum bag, which would bear a risk of damaging it. The 'vacuum-vacuum' phase helps to prevent the compression of the insulation by the pressure of the atmosphere outside the vacuum bag and allows an easier removing of residual gases, solvents and moisture. Next, a compression gas as nitrogen is filled into the vessel 30 and the conductive bar 11 with the main wall insulation 3 and the other surrounding layers is heated in one or several different heating segments with one or several different heating rates. Optionally, ventilation of the compression gas in the vessel 30 is done by a proper device (not shown), in order to speed up the heating of the conductive bar 11 and the main wall insulation 3. During the heating segments one or several different pressure steps of the compression gas inside the vessel 30 are applied. For example, after the 'vacuum-vacuum' phase, a step of standard pressure (1 atm) during the first fast heating segment enables a more efficient heat transfer and the use of the optional ventilation of the compression gas without consolidating the insulation layer or main wall insulation 3 as strongly as with the final overpressure. During the consolidation with the final overpressure excess resin is squeezed out of the resin-rich mica-glass tape and is taken-in by the breather/ bleeder layer. During the heating and pressure segments the volume inside the synthetic layer is being continuously evacuated until a certain point of time. At this point of time when the B-stage resin is still in a low-viscous liquid phase, the volume inside the synthetic layer 20 is vented or pressured in order to improve the absence of voids in the main wall insulation 3. Then the main wall insulation 3 is cured at the final temperature and with overpressure for a specified time. Finally, the conductive bar 11 with the fully cured insulation layer 3 and the further surrounding layers is cooled down, taken out of the vessel 30 and the release tape 5. The shapes 10, the breather/ bleeder 15, and the synthetic layer 20 are removed from the conductor bar 1 with the so-called unpacking process.

The method of manufacturing a conductor bar 1 conceived in this manner allows a variety of process sequences and adaptations to the described B-stage resin-rich mica glass tape comprising different heating steps and pressure steps in the vessel 30 or autoclave, as well as time segments of vacuum and pressure in the volume inside the synthetic layer 20. All these variants fall within the scope of the inventive concept.

### REFERENCE NUMBERS

- 1: conductor bar
- 3: main wall insulation
- 5: release tape
- 10: shapes
- 11: conductive bar
- 15: breather/ bleeder layer
- 20: synthetic material layer
- 22: vacuum pump
- 23: flexible vacuum line
- 24: venting/ pressuring valve
- 30: vessel

## Claims

1. A method for producing a conductor bar (1) comprising the steps of packing a conductive bar (11) with a main wall insulation (3) into a layer of release tape (5), a layer of breather/ bleeder (15) and thereon a layer of synthetic material (20), which is forming a hermetical sealing around the insulated conductive bar (11), placing the insulated conductive bar (11) with the layers into a vessel (30), evacuating the volume inside the synthetic material (20), creating an overpressure inside the vessel (30) causing a compression at the conductive bar (11), and thermally curing the main wall insulation (3) around the conductive bar (11).

2. The method according to claim 1, **characterised in** providing two shapes (10) in L-form around the straight part of the conductive bar (11) with insulation layer (3) and release tape (5), the shapes (10) essentially surrounding the conductive bar (11) with insulation layer (3) and release tape (5), whereas the insulation layer (3), the release tape (5), and the shapes (10) are underneath the layer of breather/ bleeder (15) and underneath the layer of synthetic material (20).

3. The method according to claim 1, **characterised in** applying a multistep pressure process to the vessel (30) containing three steps: first, a vacuum step, whereby the vessel (30) is evacuated, and the pressure in the vessel (30) is kept slightly higher than the pressure in the volume inside the layer of synthetic material (20), second, a pressure step, whereby the vessel (30) is filled with a compression gas to a pressure of approximately one atmosphere, third, a high pressure step, whereas a final curing overpressure is applied to the vessel (30).

4. The method according to claim 1, **characterised in that** the volume inside the layer of synthetic material (20) is vented to atmospheric pressure at a time when a B-stage resin is still in a low-viscous liquid phase, before the resin is gelling.

5. The method according to claim 1, **characterised in** applying a multi-segment heating process in the vessel (30) containing four segments: first, a slow heating rate at low temperatures; second, a fast heating rate to medium temperatures; third, a slow heating rate at medium temperatures; fourth, a fast heating rate to the final curing temperature.

6. The method according to claim 1, **characterised in that** the volume inside the layer of synthetic material (20) is pressured to a certain overpressure with a compression gas at a time when a B-stage resin is in a low-viscous liquid phase, before the resin is gelling, whereas the applied overpressure is lower than the overpressure inside the vessel (30).

7. Use of a layer of breather/ bleeder (15) in a manufacturing process to manufacture a conductor bar (1).
